# EUROPEAN PATENT APPLICATION

(11) **EP 0 559 254 A1**
(43) Date of publication of application: **08.09.1993**
(21) Application number: 93200325.4
(22) Date of filing: 05.02.1993
(51) Int. Cl.: C08J 9/20, C08J 9/14, C08J 9/32, B01J 13/02, B01J 13/14, C09D 5/18

(54) **Thermoplastic microspheres, process for their preparation and use of the microspheres**

(30) Priority: 06.03.1992 SE 9200704
(71) Applicant: Casco Nobel Industrial Products AB, S-100 61 Stockholm (SE)
(72) Inventor: Lindgren, Johan Gottfrid, S-854 63 Sundsvall (SE)
(74) Representative: Schöld, Zaid

(57) **Abstract**

Thermoplastic microspheres, unexpanded or expanded, which contain chlorine-free aliphatic fluorocarbons or fluorohydrocarbons. Chlorine-free aliphatic fluorocarbons or fluorohydrocarbons are used as blowing agent at the production of expandable thermoplastic microspheres. Expanded microspheres containing these blowing agents have very low densities. The use of the specific blowing agents also gives other advantages, especially with regard to fire and insulation properties and the microspheres are thus especially suitable for use in fire-resistant paints and insulation materials.

## Description

The present invention relates to thermoplastic microspheres and more particularly to such microspheres containing special blowing agents. The invention also relates to preparation of the microspheres and the use of these.

Expandable and expanded thermoplastic microspheres are used in a great number of fields, for example as fillers in polymers, paints, plastisols, paper, cable insulation etc, and have been produced on a commercial scale for several years. Expandable thermoplastic microspheres are principally prepared according to the process disclosed in the US patent 3615972. The microspheres are thus conventionally prepared by suspension polymerisation of a liquid monomer or monomer mixture containing a condensed blowing agent which is dispersed in an aqueous phase containing a suspending agent and polymerisation initiator. The microspheres obtained after the polymerisation consist of a polymer shell which encapsulates the liquid, volatile blowing agent. The spheres expand by heating to a temperature above the boiling point of the blowing agent and above the softening point of the polymer.

At the production of expandable thermoplastic microspheres hydrocarbons such as n-butane, isobutane, isopentane and neopentane are conventionally used, and especially isobutane and isopentane which give microspheres with very good expansion capability. The commercially available microsphere product Expancel^{(R)} contains isobutane as blowing agent and has a polymer shell of a copolymer of vinylidene chloride and acrylonitrile. Other blowing agents than pure hydrocarbons have been suggested for use in the preparation of microspheres. In the above mentioned US patent 3615972 it is, for example, mentioned that certain chlorofluorocarbons can be used, but these have, however, not been used commercially. Chlorofluorocarbons do not give the microspheres satisfactory expansion properties and they also have other disadvantages.

According to the present invention it has been found that aliphatic fluorocarbons and fluorohydrocarbons are excellent blowing agents for microspheres and give spheres with very good expansion properties. Expanded microspheres containing aliphatic fluorocarbons and fluorohydrocarbons have densities of corresponding magnitude as those containing isobutane and isopentane. The use of the specific blowing agents also lead to other advantages, particularly with regard to fire properties and insulation properties.

The present invention thus relates to thermoplastic microspheres containing chlorine-free aliphatic fluorocarbons and fluorohydrocarbons as further defined in the claims. The invention also relates to a method for the production of the microspheres and to the use of these as additives/fillers in products for which heat insulation capacity and/or fire resistance are of importance.

The basis for the present invention is thus the use of chlorine-free aliphatic fluorocarbons and fluorohydrocarbons as blowing agent in the production of expandable thermoplastic microspheres. The expandable thermoplastic microspheres encapsulates the volatile chlorine-free aliphatic fluorocarbons and fluorohydrocarbons in liquid form in a shell of polymerized ethylenically unsaturated monomer or mixture of ethylenically unsaturated monomers. When the expandable microspheres are heated to temperatures above the boiling point of the blowing agent and above the softening point of the polymer the propellant is volatilized and the microspheres expand which results in microspheres having a substantially increased diameter and which contain the blowing agent in gas form.

The microspheres according to the present invention contains chlorine-free aliphatic fluorocarbons and/or fluorohydrocarbons. These can make up the whole amount of blowing agent but it is also within the scope of the invention that the microspheres contain these blowing agents in combination with other per se conventionally used blowing agents such as n-butane, isobutane, isopentane and neopentane and preferably in combination with isobutane or isopentane. The amount of other blowing agent than fluorocarbons or fluorohydrocarbons should suitably not exceed 50% by weight and preferably not exceed 25% in order to utilize the advantages obtained with fluorocarbons and fluorohydrocarbons. The greatest advantages with regard to fire and insulation are of course obtained when the entire amount of blowing agent is made up from fluorocarbons or fluorohydrocarbons. However, mixtures with other blowing agents can be advantageous for example to compensate for high pressures during polymerisation when the utilized fluorocarbon or fluorohydrocarbon has a lower boiling point.

The thermoplastic shell of the microspheres is made up from polymers or copolymers of ethylenically unsaturated monomers. Examples of suitable monomers are vinyl chloride, vinylidene chloride, acrylonitrile, methacrylonitrile, acrylic esters, methacrylic esters, styrene etc, and mixtures of two or more of these. Preferred microspheres have a shell based on a copolymer containing acrylonitrile and then particularly copolymers of acrylonitrile and vinylidene chloride and/or methyl methacrylate and/or methacrylonitrile. These copolymers can for example contain 30 to 80% by weight of acrylonitrile, 0 to 70% by weight of vinylidene chloride and/or 0 to 50% by weight of methyl methacrylate and/or methacrylonitrile. The shell of the microspheres can be cross-linked or not cross-linked.

The expandable microspheres can be prepared in per se known manner by suspension polymerisation of the monomers using conventional polymerisation initiators such as dialkyl peroxides, diacyl peroxides, peroxy esters, peroxy dicarbonates and azo compounds. The polymerisable monomer or monomer mixture, the condensed blowing agent, optional cross-linking agent and the initiator are suspended in an aqueous medium containing suspending agent in a reaction vessel. As cross-linking agents divinylbenzene, ethylene glycol dimethacrylate, triethylene glycol dimethacrylate, triallyl isocyanate etc, can for example be used. Usually a powder stabilizer, such as colloidal silicic acid, is used as suspending agent. The powder stabilizer is usually used in combination with a so-called co-stabilizer, such as for example polyethylene oxide, polyethyleneimine, tetramethylammonium hydroxide, condensation products of diethanolamine and adipic acid, condensation products of urea and formaldehyde. The powder stabilizer is usually used in an amount of from about 3 to about 10% by weight, based on the monomer, while the co-stabilizer usually is used in an amount of some tenth %.

The blowing agent, the chlorine-free aliphatic fluorocarbons and fluorohydrocarbons and optional other blowing agents, as stated earlier, is usually used in amounts of from about 10 to about 70% by weight, based on total monomer weight, so that they make up from about 10 to about 45% of the weight of the produced expandable microspheres. The process equipment used for the polymerisation is decisive for the choice of the chlorine-free aliphatic fluorocarbons and fluorohydrocarbons since a too low boiling point for these gives rise to too high pressures during the polymerisation process. The boiling point should usually not be lower than -40°C and preferably not lower than -20°C. The upper limit for the boiling point of the compounds is in the first hand dependent on the monomer composition, since the boiling point of the compounds shall be below the softening point for the polymer in question in order to carry out expansion of the microspheres. Generally the boiling point of the compounds should thus not exceed 60°C and as a rule not exceed 40°C. As examples of fluorocarbons and fluorohydrocarbons which can be used can be mentioned CH₂FCF₃, CH₃CHF₂, CH₃CH₂F, CF₃CF₂CF₃, CF₃CF₂CF₂CF₃, cyclo-C₄F₈, CF₃(CF₂)₃CF₃ and CF₃CHFCF₃. 2H-heptafluoropropane (CF₃-CHF-CF₃) is especially suitable.

The polymerisation can be carried out in per se known manner and usually polymerisation temperatures of from about 40°C to about 70°C are used and the polymerisate is normally post-treated by filtration, washing and dewatering. The particle size for the unexpanded spheres, and thus also for the expanded spheres, can vary within wide limits and is selected with regard to the desired properties of the finished product. At the polymerisation the particle size is controlled mainly by the composition of the polymerisation mixture and the degree of stirring. 1 µm to 1 mm, preferably 2 µm to 0.5 mm and especially 5 µm to 50 µm can be mentioned as examples of particles sizes of unexpanded spheres.

The expandable spheres are expanded by heating to a temperature which gives rise to softening of the polymer shell and volatilization of the propellant whereby the particles expand to a diameter substantially larger than the diameter for the unexpanded particles and the expansion can be carried out in per se known manners. The spheres can for example be dried and expanded by dispersing the unexpanded spheres in an inert liquid, atomization of the dispersion and bringing this in contact with a warm inert gas stream. Another suitable manner for expansion is disclosed in the European patent application 0348372. According to this process the expandable microspheres are first dried to a certain dry content and then expanded by heating, eg by IR-heating. The expansion temperature is set by the boiling point of the blowing agent and the softening point of the shell-polymer and is usually within the range of from about 70°C to about 140°C. It has been found that the blowing agents used according to the present invention give at least as good expansion as the commercially used blowing agents isobutane and isopentane and thereby give expanded microspheres with about the same densities as those which are commercially acceptable. This is in contrast to chlorofluorocarbons and chlorofluorohydrocarbons which give substantially inferior expansion, which is believed to be due to their interference at the polymerisation, and expanded microspheres which have densities about 3 to about 7 times higher than when isobutane or isopentane is used. Compared with isobutane and isopentane 2H-heptafluoropropane, for example, is also advantageous since it is non-combustible which is of importance both at the production and the use of the microspheres. Since the compounds are non-combustible problems with dust explosions in connection with drying of expandable as well as of expanded spheres are reduced. Another advantage in comparison with isobutane and isopentane is that for example 2H-heptafluoropropane has substantially lower thermal conductivity which broadens the fields of application for the microspheres. Compared with chlorofluorocarbons the present fluorocarbons and fluorohydrocarbons are also advantageous since they do not have any ozone degrading effect.

Expandable and expanded thermoplastic microspheres have a large number of applications. The use of unexpanded microspheres is based on the expansion capability of the spheres and they are then expanded in situ in the materials in which they are incorporated when these materials are heated. As some examples of such use can be mentioned printing inks for the production of relief print on paper and textiles, fillers in paper and board and foaming of for example PVC-plastisol. At the use of expanded microspheres the low density and filling effect of the spheres are utilized and they can for example be used as fillers in paints, putty, polymers and resins such as polyester, polyurethane, epoxy resins, composite materials based on polymers, paper, insulation materials etc.. The microspheres of the present invention can be used for the same purposes for which microspheres are generally used. The present microspheres are particularly suitable for use in products for which fire resistance and thermal insulating capacity are of importance since the microspheres are advantageous in such applications since they contain chlorine-free fluorocarbons and fluorohydrocarbons, such as 2H-heptafluoropropane, which are non-combustible and which have low thermal conductivity. The present invention thus also relates to use of the microspheres in fire-resistant paints and in insulation materials. In fire-resistant paints the microspheres are used as fillers/additives. The unexpanded microspheres are advantageously used in fire-resistant paints since they expand at heating and thereby give an insulating layer which protects the substrate. When the temperature becomes so high that the microspheres break the non-combustible blowing agent is released and the fire is retarded. As concerns insulation materials the entire product can be made up from microspheres, for economical reasons the microspheres are, however, also in this application as a rule used as fillers/additives. As examples of insulation materials wherein the microspheres can be used are jointing compounds for, among other things, cable entries, where good insulation and fire-resistant properties are desired.

The invention is further illustrated in the following examples which, however, are not intended to limit the same. Parts and per cent relate to parts by weight and per cent by weight respectively, unless otherwise stated.

### Example 1

125 parts of water were mixed with 5.5 parts of 1 molar NaOH-solution and 10 parts of 10% acetic acid solution, 6 parts of 40% colloidal silicic acid, 0.5 parts of a condensation product of diethanolamine and adipic acid and 0.5 parts of dicetyl peroxydicarbonate and charged to a 15 1 reactor equipped with stirrer. The reactor was sealed and evacuated. A mixture of 0.3 parts of divinylbenzene, 7 parts of methylmethacrylate, 32 parts of acrylonitrile, 32 parts of vinylidene chloride and 29 parts of 2H-heptafluoropropane were then charged. The polymerisation mixture was stirred at 850 rpm during 60 minutes. After homogenization the rotation speed was lowered to 400 rpm and the mixture was then heated to 55°C and polymerized at this temperature for 8 hours. The obtained polymerisate was washed and dewatered. The unexpanded microspheres had an average particle size, by weight, of 16 µm. The microspheres were dried and their expansion capacity was investigated by means of thermomechanical analysis. They were found to have the same expansion capacity and temperature resistance as if isobutane or isopentane had been used, ie a density of about 17 kg/m³ was reached.

### Comparative Examples 2a) - 2c)

The process according to Example 1 was repeated with other blowing agents.
2a) Instead of 2H-heptafluoropropane 12 parts of isopentane were used. The dried microspheres had a density below 20 kg/m³.
2b) Instead of 2H-heptafluoropropane 30 parts of trichlorofluoromethane were used. The dried microspheres had a density of about 60 kg/m³.
2c) Instead of 2H-heptafluoropropane 30 parts of 1,1-dichloro-2,2,2-trifluoroethane were used. The dried microspheres had a density of about 100 kg/m³.

### Example 3

For evaluation of the heat insulation capacity of products produced from microspheres according to the invention a plate having the dimensions 300x400x20 mm was produced. This was produced by spreading dry unexpanded microspheres, prepared according to Example 1, in a mould which was then sealed and placed in an oven where it was allowed to stand during 45 minutes at a temperature of 135°C. The obtained plate had a density of 40 kg/m³. The heat conductivity was measured to 0.0235 W/m°C. For a plate produced in the same manner from microspheres containing isobutane as the blowing agent the measured heat conductivity was 0.0275 W/m°C. A clearly improved insulation capability was thus obtained with microspheres according to the invention containing 2H-heptafluoropropane as blowing agent.

## Claims

1. Thermoplastic microspheres having a shell of polymerized ethylenically unsaturated monomer or mixture of ethylenically unsaturated monomers which encapsulates a blowing agent, characterized in that the blowing agent comprises a chlorine-free aliphatic fluorocarbon or fluorohydrocarbon.

2. Microspheres according to claim 1, characterized in that the microspheres are unexpanded and contain the chlorine-free aliphatic fluorocarbon or fluorohydrocarbon in liquid form.

3. Microspheres according to claim 1, characterized in that the microspheres are expanded and contain the chlorine-free aliphatic fluorocarbon or fluorohydrocarbon in gas form.

4. Microspheres according to any of the preceding claims, characterized in that the chlorine-free aliphatic fluorocarbon or fluorohydrocarbon has a boiling point of not lower than -40°C.

5. Microspheres according to claim 4, characterized in that the chlorine-free aliphatic fluorocarbon or fluorohydrocarbon is 2H-heptafluoropropane.

6. Microspheres according to any of the preceding claims, characterized in that the entire amount of blowing agent is a chlorine-free aliphatic fluorocarbon or fluorohydrocarbon.

7. Microspheres according to any of claims 1 to 5, characterized in that the blowing agent is made up from chlorine-free aliphatic fluorocarbon or fluorohydrocarbon in combination with not more than 50% by weight of a blowing agent selected from the group n-butane, isobutane, isopentane and neopentane.

8. Microspheres according to any of the preceding claims, characterized in that the shell is based on a copolymer of acrylonitrile with vinylidene chloride and/or methyl methacrylate and/or methacrylonitrile.

9. A process for the production of thermoplastic microspheres by polymerisation of an ethylenically unsaturated monomer or a mixture of ethylenically unsaturated monomers in aqueous suspension in the presence of a blowing agent, characterized in that the blowing agent comprises a chlorine-free aliphatic fluorocarbon or fluorohydrocarbon.

10. A process according to claim 9, characterized in that the chlorine-free aliphatic fluorocarbon or fluorohydrocarbon has a boiling point of not lower than -40°C.

11. A. process according to claim 10, characterized in that the chlorine-free aliphatic fluorocarbon or fluorohydrocarbon is 2H-heptafluoropropane.

12. Use of expandable or expanded thermoplastic microspheres having a shell of polymerized ethylenically unsaturated monomer or mixture of ethylenically unsaturated monomers which encapsulates a blowing agent comprising a chlorine-free aliphatic fluorocarbon or fluorohydrocarbon in fire-resistant paints and insulation materials.

13. Use according to claim 12, whereby the chlorine-free aliphatic fluorocarbon or fluorohydrocarbon in the microspheres is 2H-heptafluoropropane.

14. Use according to claim 12 or 13, whereby the whole amount of blowing agent is made up from chlorine-free aliphatic fluorocarbon or fluorohydrocarbon.
